# EUROPEAN PATENT SPECIFICATION

(11) **EP 3 882 587 B1**
(45) Date of publication and mention of the grant of the patent: **11.05.2022**
(21) Application number: 21160282.6
(22) Date of filing: 02.03.2021
(51) Int. Cl.: G01G 19/393

(54) **WEIGHING APPARATUS**
WÄGEVORRICHTUNG
APPAREIL DE PESAGE

(30) Priority: 19.03.2020 JP 2020048797; 04.02.2021 JP 2021016518
(43) Date of publication of application: 22.09.2021
(73) Proprietor: Ishida Co., Ltd., Kyoto 606-8392 (JP)
(72) Inventor: NAKAMURA, Kazunori, Ritto-shi, Shiga 520-3026 (JP); NOGUCHI, Isao, Ritto-shi, Shiga 520-3026 (JP)
(74) Representative: Gill Jennings & Every LLP

(56) References cited:
- EP-A1- 3 564 632
- EP-A1- 3 617 671
- EP-B1- 3 401 654
- JP-A- 2018 077 075

## Description

### Technical Field

The present invention relates to a weighing apparatus.

### Background Art

Patent Literature 1 discloses a weighing apparatus including: a weighing hopper that temporarily receives an article in order to weigh the article and sorts and discharges the weighed article in either a first direction or a second direction; a booster hopper that temporarily receives the article discharged in the first direction and discharges the received article downstream; and a discharge chute in which the article discharged by the booster hopper slides down. The weighing apparatus further includes: a sorting chute; and a drive unit that switches the position of the sorting chute.

In a case where the sorting chute is disposed outside the discharge chute in the width direction, the article discharged in the second direction from the weighing hopper strikes the wall face of the sorting chute, so that the article is guided to the discharge chute. Meanwhile, in a case where the article in the weighing hopper needs excluding from the path, the drive unit moves the sorting chute along the width direction, inside the discharge chute in the width direction. Thus, the sorting chute is disposed inside the discharge chute in the width direction. The weighing hopper discharges the article in the second direction, so that the discharged article is discharged out of the path through the sorting chute.

### Citation List

### Patent Literature

Patent Literature 1: JP 2018-77075 A

### Summary of Invention

### Technical Problem

In the weighing apparatus in Patent Literature 1, in the width direction, the sorting chute is disposed outside the discharge chute and the drive unit is disposed outside the sorting chute. Thus, the weighing apparatus requires a wide space for installation. Therefore, improvement is required for a further reduction in space for installation of such a weighing apparatus.

Thus, an object of the present invention is to provide a weighing apparatus including a sorting chute and a drive unit that selectively switches the arrangement position of the sorting chute, the weighing apparatus requiring less space for installation of the weighing apparatus.

### Solution to Problem

A weighing apparatus (1) according to the invention and claim 1 includes: a weighing hopper (5) that temporarily receives an article in order to weigh the article and sorts and discharges the article weighed in either a first direction (FD) or a second direction (SD); a booster hopper (6) that temporarily receives the article discharged in the first direction (FD) and discharges the article received, downstream; a sorting chute (7) that discharges the article discharged in the second direction (SD), downstream; a discharge chute (9) in which the article discharged from the booster hopper (6) or the sorting chute (7) slides down; and a drive unit (8) that switches a position of the sorting chute (7). The sorting chute (7): discharges, at a first position, the article discharged in the second direction (SD) to the discharge chute (9), and discharges, at a second position, the article discharged in the second direction (SD), outside the discharge chute (9). The drive unit (8) moves the sorting chute (7) upward to selectively switch the position of the sorting chute (7) between the first position and the second position.

### Brief Description of Drawings

Fig. 1 is a schematic view of a weighing apparatus according to a first embodiment.
Fig. 2 is a block diagram of a configuration regarding control in the weighing apparatus according to the first embodiment.
Fig. 3 is a perspective view of the structure of a head according to the first embodiment.
Fig. 4 is a side view illustrating a first position of a sorting chute according to the first embodiment.
Fig. 5 is a side view illustrating a second position of the sorting chute according to the first embodiment.
Fig. 6 illustrates the entire configuration of a weighing apparatus according to a second embodiment.
Fig. 7 is a side view illustrating a first position of a sorting chute according to the second embodiment.
Fig. 8 is a side view illustrating a second position of the sorting chute according to the second embodiment.

### Description of Embodiments

A weighing apparatus 1 according to an embodiment will be described with reference to the drawings. In the following drawings, the same or similar parts are denoted with the same or similar reference signs. The ratio between each dimension in the drawings is not necessarily in agreement with that in the description. The following embodiments are specific examples of the present invention, and thus the technical scope of the present invention is not limited to the embodiments.

### (First Embodiment)

### <Structure of Weighing Apparatus>

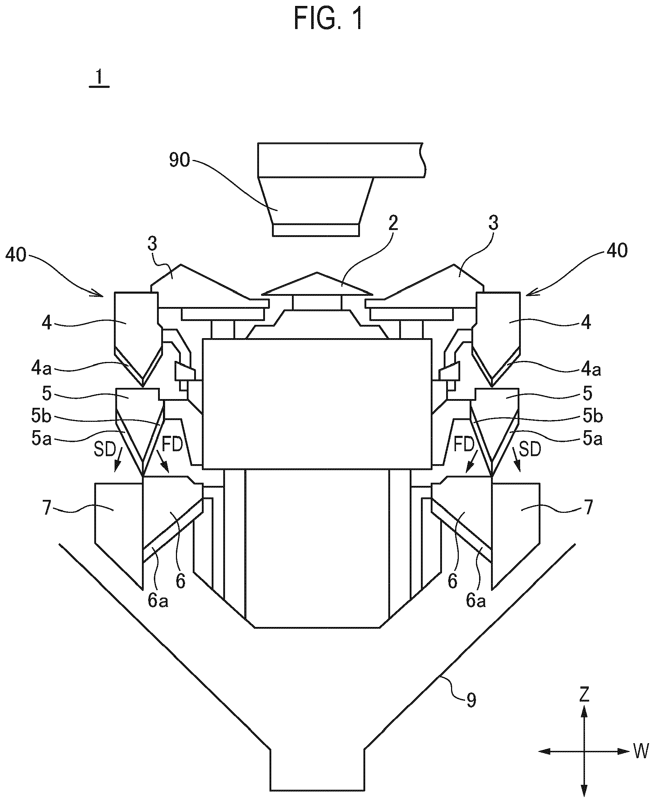

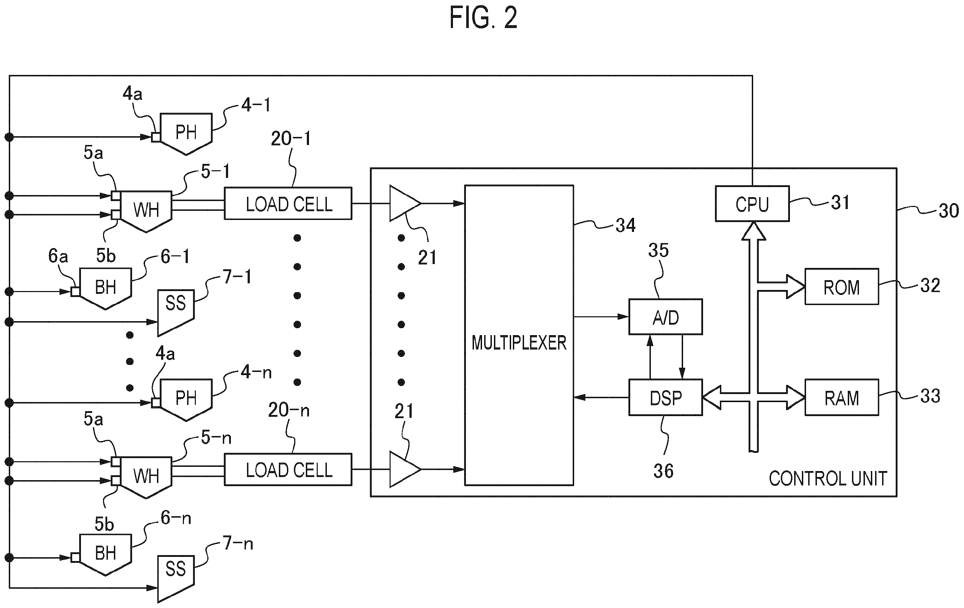

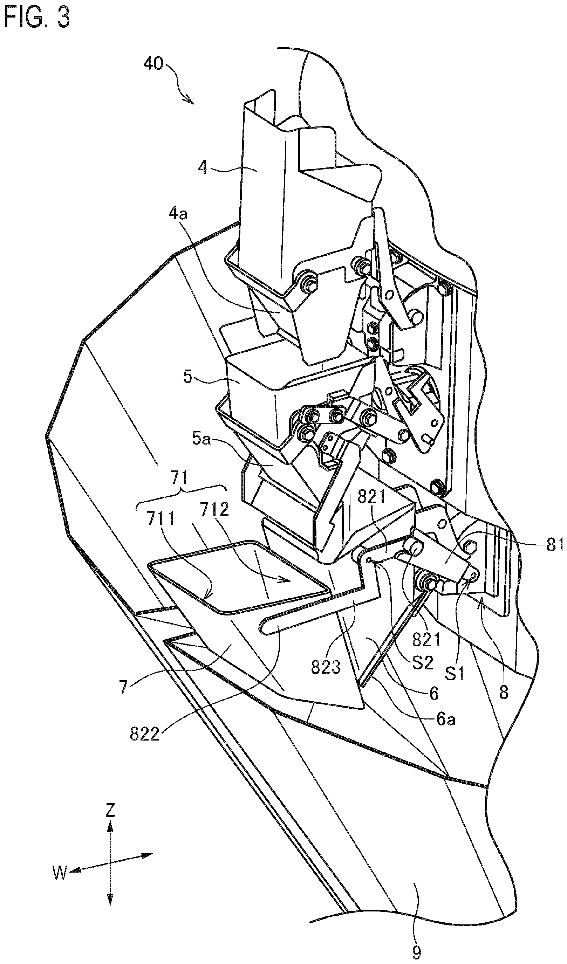

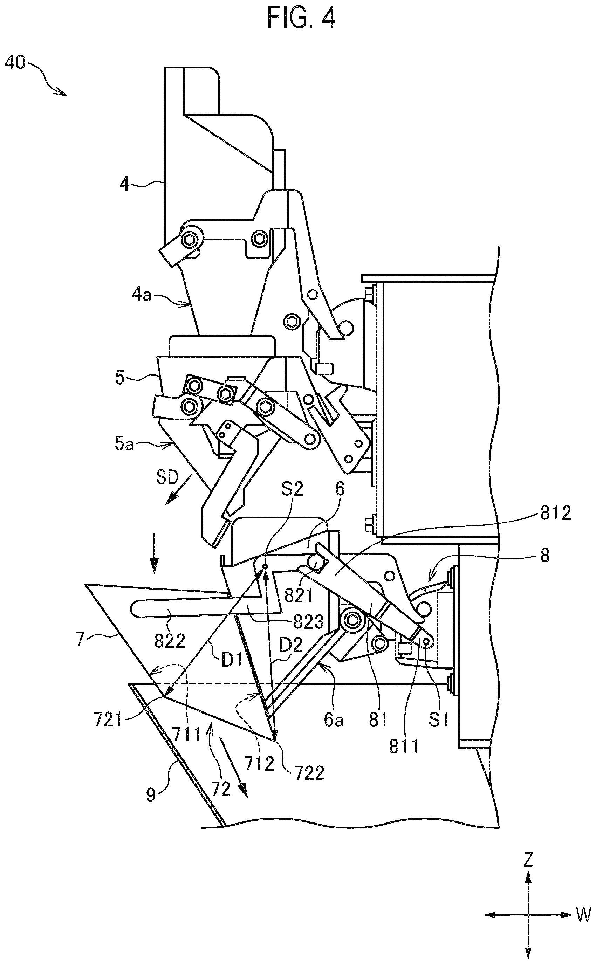

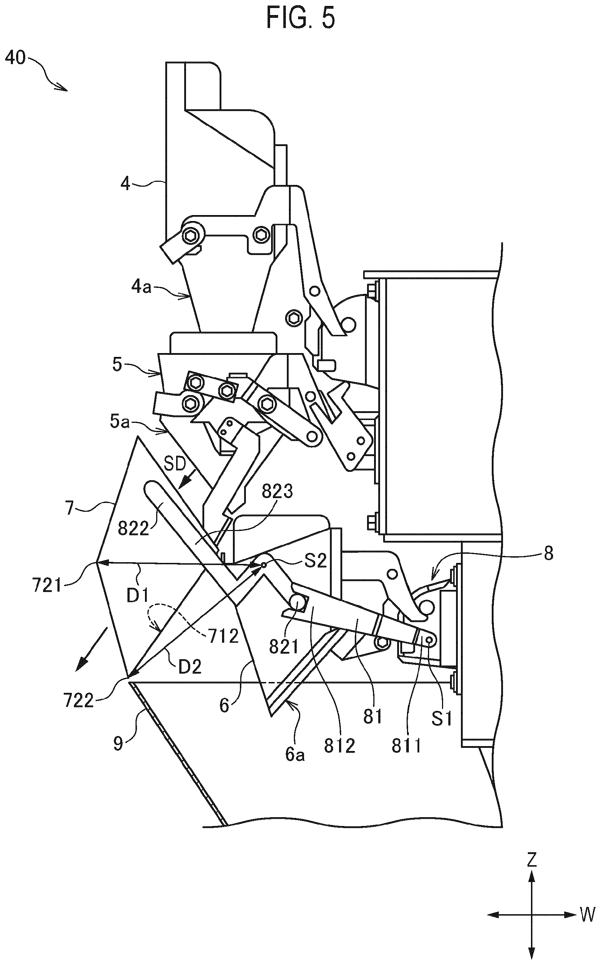

The structure of a weighing apparatus 1 according to the present embodiment will be described with Figs. 1 to 5. Fig. 1 is a schematic view of the weighing apparatus 1 according to the embodiment. Fig. 2 is a block diagram of a configuration regarding control in the weighing apparatus 1 according to the present embodiment. Fig. 3 is a perspective view of the structure of a head 40 according to the present embodiment. Fig. 4 is a side view illustrating a first position of a sorting chute 7 according to the present embodiment. Fig. 5 is a side view illustrating a second position of the sorting chute 7 according to the present embodiment. Note that, in Fig. 1, the position of each sorting chute 7 is the first position. In Fig. 4, only one head is illustrated with the other heads omitted. In Fig. 4, no radial feeder 3 is illustrated. In the following, the width direction of the weighing apparatus 1 is defined as W and the vertical direction of the weighing apparatus 1 is defined as Z. In the present embodiment, the inside in the width direction W means the direction toward the center of a discharge chute 9, and the outside in the width direction W means the direction outward from the center of the discharge chute 9.

In the present embodiment, the weighing apparatus 1 serves as a combination weighing apparatus. As illustrated in Figs. 1 and 2, the weighing apparatus 1 includes a distribution feeder 2, n number of heads 40, and the discharge chute 9. n is a natural number of 1 or more, and may be a natural number of 2 or more. For example, n is 24. The heads 40 are disposed annularly in top view. The numbers 1 to 24 are allocated to the 24 heads 40 counterclockwise in top view. As the heads 40, a first head 40-1 to an n-th head 40-n are provided. The first head 40-1 to the n-th head 40-n are disposed counterclockwise in numerical order. The meaning of "annularly" herein includes circularly and polygonally. In the present embodiment, the heads 40 disposed circularly will be given as an example. The heads 40 each include a radial feeder 3, a pool hopper 4, a weighing hopper 5, a booster hopper 6, a sorting chute 7, and a drive unit 8. Therefore, in top view, the respective radial feeders 3, pool hoppers 4, weighing hoppers 5, booster hoppers 6, and sorting chutes 7 of the heads 40 are disposed annularly.

The distribution feeder 2 is a smoothly conic member. A supply conveyer 90 provided above the distribution feeder 2 supplies articles to the distribution feeder 2. The distribution feeder 2 has an upper face that vibrates due to an electromagnet, not illustrated, provided at the lower portion of the distribution feeder 2. The distribution feeder 2 conveys the articles supplied to the upper face, radially in a circumferentially distributing manner, to supply each article to any of the radial feeders 3.

The radial feeders 3 are each a sheet-metal member made of a bent stainless-steel plate. The radial feeders 3 are disposed radially along the circumference of the distribution feeder 2. Each radial feeder 3 has a conveyance face that vibrates due to an electromagnet, not illustrated, provided at the lower portion of the radial feeder 3. The radial feeders 3 each convey the supplied articles, outward, due to vibration of the conveyance face. The radial feeders 3 each supply the articles to the pool hopper 4 of the head 40 to which the radial feeder 3 belongs. In this manner, each radial feeder 3 functions as a conveyer that conveys an article. The conveyance capacity of each radial feeder 3 can be adjusted on the basis of the vibration intensity (vibration amplitude) and vibration duration of the conveyance face. Therefore, adjustments in vibration intensity and vibration duration enable the weight of articles to be supplied to each pool hopper 4 to be kept in a predetermined range.

Each pool hopper 4 is disposed below the leading end of the corresponding radial feeder 3. The pool hoppers 4 each temporarily retain the articles supplied from the radial feeder 3 and discharge the articles. The pool hoppers 4 are each provided with a gate 4a that opens and shuts the bottom of the pool hopper 4 and a stepper motor (not illustrated) that drives the gate 4a. Each gate 4a operates to open and shut due to the stepper motor controlled by a control unit 30. The pool hoppers 4 each retain, with the gate 4a shut, the articles inside the pool hopper 4 and discharge, with the gate 4a open, the articles to the weighing hopper 5 of the head 40 to which the pool hopper 4 belongs.

The weighing hoppers 5 each temporarily receive the articles in order to weigh the articles and sorts and discharges the weighed articles in either a first direction FD or a second direction SD. Each weighing hopper 5 is disposed directly below the corresponding pool hopper 4. The weighing hoppers 5 each retain the articles supplied from the pool hopper 4 and measure the weight thereof. The weighing hoppers 5 are each provided with gates 5a and 5b that open and shut the bottom of the weighing hopper 5 and a stepper motor (not illustrated) that drives the gates 5a and 5b. The weighing hoppers 5 each retain the articles inside with the gates 5a and 5b both shut. This state indicates that each weighing hopper 5 has temporarily received the articles. The weighing hoppers 5 each sort and discharge, when either the gate 5a or the gate 5b opens, the weighed articles in either the first direction FD or the second direction SD. The weighing hoppers 5 each sort and discharge, with the gate 5b open, the articles in the first direction FD, so that the articles are discharged to the booster hopper 6 of the head 40 to which the weighing hopper 5 belongs. The weighing hoppers 5 each sort and discharge, with the gate 5a open, the articles in the second direction SD, so that the articles are discharged to the discharge chute 9.

The booster hoppers 6 each temporarily receive the articles discharged in the first direction FD and discharge the received articles downstream. Each booster hopper 6 is disposed below the corresponding weighing hopper 5 and is closer to the center of the weighing apparatus 1 than the corresponding weighing hopper 5 is. The booster hoppers 6 each temporarily retain the articles supplied from the weighing hopper 5 and discharge the articles. The booster hoppers 6 each include a gate 6a openable and shuttable. Specifically, the booster hoppers 6 are each provided with the gate 6a that opens and shuts the bottom of the booster hopper 6. The booster hoppers 6 each retain, with the gate 6a shut, the articles inside. This state indicates that each booster hopper 6 has temporarily received the articles. The booster hoppers 6 each discharge, with the gate 6a open, the articles to the discharge chute 9.

The sorting chutes 7 each discharge the articles discharged in the second direction SD, downstream. Each sorting chute 7 is disposed below the corresponding weighing hopper 5 and is closer to the outside of the weighing apparatus 1 than the corresponding weighing hopper 5 is. The position of each sorting chute 7 is switched by the corresponding drive unit 8. At the first position, the sorting chutes 7 each discharge the articles discharged in the second direction SD, to the discharge chute 9. At the second position, the sorting chutes 7 each discharge the articles discharged in the second direction SD, outside the discharge chute 9. The sorting chutes 7 each have a slide face 71 on which the articles slide down. The slide face 71 is the inner-wall face of the sorting chute 7. The slide face 71 has a first slide face 711 as the slide face 71 at the first position and a second slide face 712 as the slide face 71 at the second position. The first slide face 711 is the inner-wall face on the outside in the width direction W of the sorting chute. The second slide face 712 is the inner-wall face on the inside in the width direction W of the sorting chute. At the first position, the first slide face 711 extends from outside the discharge chute 9 to inside the discharge chute 9. At the second position, the second slide face 712 extends to outside the discharge chute 9.

The sorting chutes 7 each have an outlet 72 from which the articles having passed inside the sorting chute 7 are discharged. The outlet 72 has an outer end 721 and an inner end 722. At the first position, the outer end 721 serves as the lower end of the slide face 71 (namely, as the lower end of the first slide face 711) and is further away from the center of the discharge chute 9 than the inner end 722 is. At the second position, the inner end 722 serves as the lower end of the slide face 71 (namely, as the lower end of the second slide face 712). The inner end 722 is further away from the center of the discharge chute 9 than the outer end 721 is. As illustrated in Fig. 4, at the first position, the outlet 72 is located in the discharge chute 9. Meanwhile, as illustrated in Fig. 5, at the second position, the outlet 72 is located outside the discharge chute 9.

As illustrated in Figs. 4 and 5, in side view of the weighing apparatus 1, the distance between the outer end 721 of the outlet 72 and a second pivot shaft S2 is defined as a first distance D1, and the distance between the inner end 722 of the outlet 72 and the second pivot shaft S2 is defined as a second distance D2. According to the present embodiment, the second distance D2 is longer than the first distance D1. Note that the side view is a side viewed along the second pivot shaft S2.

The drive units 8 each switch the position of the sorting chute 7. The drive units 8 each move the sorting chute 7 upward to selectively switch the position of the sorting chute 7 between the first position and the second position.

In the present embodiment, the drive units 8 each raise the sorting chute 7 to switch the position of the sorting chute 7 from the first position to the second position. For example, the drive units 8 may each pivot the sorting chute 7 while moving the sorting chute 7 in the vertical direction Z, to switch the position of the sorting chute 7 between the first position and the second position.

In the present embodiment, the drive units 8 are each disposed closer to the center of the weighing apparatus 1 than the booster hopper 6 is. The drive units 8 each perform opening and shutting of the gate 6a of the booster hopper 6. Due to control from the control unit 30, the drive units 8 each move an arm, not illustrated, to perform opening and shutting of the gate 6a of the booster hopper 6.

Note that a case where each sorting chute 7 moves upward includes, obviously, a case where each sorting chute 7 moves along the vertical direction Z, and further includes a case where the angle of the direction of movement of each sorting chute 7 to the vertical direction Z is less than 45 degrees in side view of the weighing apparatus 1.

The drive units 8 each include a first arm 81, a second arm 82 coupled to the first arm 81, and a stepper motor (not illustrated). The first arm 81 pivots on a first pivot shaft S1, due to drive of the stepper motor. The first arm 81 includes an inner end 811 located closer to the center of the weighing apparatus 1 and an outer end 812 located closer to the outside in the width direction W than the inner end 811 is. As illustrated in Figs. 4 and 5, the inner end 811 overlaps the first pivot shaft S1. The outer end 812 is coupled to the second arm 82. The second arm 82 pivots on the second pivot shaft S2, due to drive of the stepper motor. The second arm 82 includes an inner end 821 located closer to the center of the weighing apparatus 1, an outer end 822 located closer to the outside in the width direction W than the inner end 821 is, and a body 823 connecting the inner end 821 and the outer end 822. The inner end 821 is coupled to the outer end 812 of the first arm 81. The outer end 822 is fixed to a side of the sorting chute 7. The body 823 is supported pivotably through a supporter 65 provided between the booster hopper 6 and the body 823. As illustrated in Figs. 4 and 5, the body 823 overlaps the second pivot shaft S2.

The articles discharged from the booster hoppers 6 and the sorting chutes 7 slide down in the discharge chute 9. The discharge chute 9 discharges the articles downstream. The discharge chute 9 gathers, in one place, the articles discharged from any weighing hopper 5 or booster hopper 6 selected by combination calculation, to be described later, and discharges the articles downward. The articles discharged from the discharge chute 9 are supplied to, for example, a packaging apparatus at the post stage.

### <Configuration regarding Weighing Control in Weighing Apparatus 1>

A configuration regarding weighing control in the weighing apparatus 1 according to the present embodiment will be described with Figs. 1 to 5. Note that, in Fig. 2, the pool hoppers 4 belonging, respectively, to the first head 40-1 to the n-th head 40-n are indicated as pool hoppers 4-1 to 4-n. Similarly, the weighing hoppers 5 are indicated as weighing hoppers 5-1 to 5-n, the booster hoppers 6 are indicated as booster hoppers 6-1 to 6-n, and load cells 20 are indicated as load cells 20-1 to 20-n.

As illustrated in Fig. 2, the weighing apparatus 1 includes the control unit 30. The control unit 30 controls the heads 40. Specifically, the control unit 30 controls the conveyance operation of each radial feeder 3 (specifically, vibration of the conveyance face with the electromagnet) and additionally controls the operation regarding gate opening and shutting of each hopper (each pool hopper 4, each weighing hopper 5, and each booster hopper 6). Specifically, the control unit 30 performs gate opening and shutting operations to the gate 4a of each pool hopper 4, the gates 5a and 5b of each weighing hopper 5, and the gate 6a of each booster hopper 6 by controlling the corresponding stepper motors. Each weighing hopper 5 is provided with a load cell 20 and measures the weight of articles with the load cell 20. Each load cell 20 outputs the measured weight as a weight signal to the control unit 30. The control unit 30 controls the drive units 8. The control unit 30 controls the respective stepper motors in the drive units 8, so that each drive unit 8 switches the position of the sorting chute 7.

The control unit 30 includes 24 amplifiers 21, a CPU 31, a ROM 32, a RAM 33, a multiplexer 34, an A/D converter 35, and a digital signal processor (DSP) 36. The CPU 31 mainly controls the weighing operation of the weighing apparatus 1. The amplifiers 21 are provided one-to-one to the load cells 20. The amplifiers 21 each amplify the weight signal from the load cell 20 and output the amplified weight signal to the multiplexer 34. In accordance with a command from the DSP 36, the multiplexer 34 selects one weight signal from the respective amplified weight signals received from the amplifiers 21 and outputs the one weight signal to the A/D converter 35. The A/D converter 35 converts the weight signal that is an analog signal into a digital signal and outputs the weight signal converted in the digital signal to the DSP 36. The DSP 36 mainly performs filtering to the weight signal converted in the digital signal and outputs the weight signal subjected to the filtering to the CPU 31. The CPU 31 stores the received weight signal into the RAM 33. Note that the CPU 31, the ROM 32, the RAM 33, and the DSP 36 are mutually connected through a bus, and the ROM 32 stores, for example, an operation program for causing the CPU 31 to operate.

### <Weighing Operation of Weighing Apparatus 1>

The weighing operation of the weighing apparatus 1 according to the present embodiment will be described with Figs. 1 to 5. Articles fall from the supply conveyer 90 and then are supplied onto the distribution feeder 2. At this time, because the distribution feeder 2 is vibrating on the basis of an instruction from the CPU 31, the articles receive vibration from the distribution feeder 2. Thus, each article moves outward on the distribution feeder 2 to reach any of the radial feeders 3.

In a case where a pool hopper 4-m (1 ≤ m) that is empty is present among the n number of pool hoppers 4-1 to 4-n, the CPU 31 vibrates the conveyance face of the radial feeder 3-m corresponding to the pool hopper 4-m. Due to the vibration, articles move outward on the radial feeder 3-m so as to be sent into the pool hopper 4-m that is empty. Similarly, the pool hoppers 4 other than the pool hopper 4-m are supplied with articles.

In a case where a weighing hopper 5-k (1 ≤ k) that is empty is present among the n number of weighing hoppers 5-1 to 5-n, the CPU 31 opens the gate 4a of the pool hopper 4-k located above the weighing hopper 5-k, so that the articles are sent to the weighing hopper 5-k. Simultaneously, the DSP 36 is notified that the weighing hopper 5-k has been supplied with the articles.

The weighing hopper 5-k retains the received articles and measures the weight of the retained articles with the load cell 20-k. Then, the weighing hopper 5-k outputs the measured weight as a weight signal to the corresponding amplifier 21. The weight signal amplified by the amplifier 21 is input to the multiplexer 34. Similarly, the weighing hoppers 5 other than the weighing hopper 5-k output the respective weight signals. Then, the weight signals after amplification are input to the multiplexer 34.

The DSP 36 instructs the multiplexer 34 to select the weight signal from the load cell 20-k. In accordance with the instruction, the multiplexer 34 selects the weight signal from the load cell 20-k among the input weight signals and outputs the weight signal to the A/D converter 35. In accordance with a timing signal sent from the DSP 36, the A/D converter 35 converts the weight signal that is an analog signal into a digital signal, and outputs the weight signal converted in the digital signal to the DSP 36. The DSP 36 performs filtering to the weight signal converted in the digital signal and outputs the weight signal subjected to the filtering to the CPU 31. The CPU 31 stores, as the weight of articles retained in the weighing hopper 5-k, the weight signal subjected to the filtering into the RAM 33.

When the booster hopper 6-k empties, the CPU 31 opens the gate 5b of the weighing hopper 5-k, so that the articles in the weighing hopper 5-k are supplied to the booster hopper 6-k. Simultaneously, the weight of articles in the weighing hopper 5-k (weight signal) stored in the RAM 33 is stored, as the weight of articles in the booster hopper 6-k, into the RAM 33, so that the weight of articles in the weighing hopper 5-k having been stored in the RAM 33 is reset. After that, when articles are supplied into the weighing hopper 5-k, the RAM 33 stores the weight thereof, similarly. In this manner, the weight of articles retained in each weighing hopper 5 and the weight of articles retained in each booster hopper 6 are stored in the RAM 33.

The CPU 31 performs combination calculation of each weight of articles stored in the RAM 33. Specifically, a combination of weights is acquired among the weights of articles in the weighing hoppers 5 and the weights of articles in the booster hoppers 6, stored in the RAM 33, such that the total weight is in a previously set allowable range. Then, among the weighing hoppers 5 and the booster hoppers 6, the CPU 31 selects hoppers each retaining articles having a weight included in the acquired combination, and opens the gates thereof. In a case where weighing hoppers 5 are selected, the gate 5a of each weighing hopper 5 opens with the gate 5b shut. In a case where the corresponding sorting chute 7 is out of the first position, the CPU 31 controls the drive unit 8 such that the sorting chute 7 moves to the first position. The articles in each hopper selected on the basis of the result of the combination calculation are supplied to the discharge chute 9 through the sorting chute 7, so that the articles having a weight in a predetermined allowable range are sent to, for example, a packaging apparatus.

Meanwhile, in a case where the weight of articles measured in a weighing hopper 5 exceeds a predetermined weight range, the CPU 31 controls the stepper motor of the drive unit 8 corresponding to the weighing hopper 5 retaining an excessive amount of articles. Specifically, due to the control, the drive unit 8 switches the position of the sorting chute 7 from the first position to the second position. After the sorting chute 7 moves to the second position, the CPU 31 performs control such that only the gate 5a opens. Thus, the articles are discharged outside the sorting chute 7 through the sorting chute 7.

### <Sorting Operation of Weighing Apparatus 1>

The sorting operation of the weighing apparatus 1 according to the present embodiment will be described with Figs. 1 to 5. As illustrated in Figs. 3 and 4, in a case where the sorting chute 7 is at the first position, the articles discharged from the weighing hopper 5 slide down on the first slide face 711 of the sorting chute 7 and then are discharged to the discharge chute 9. Thus, the sorting chute 7 sorts the articles into the discharge chute 9.

Due to control from the control unit 30, the drive unit 8 switches the position of the sorting chute 7 from the first position to the second position. In the present embodiment, as illustrated in Figs. 4 and 5, the drive unit 8 moves the outer end 812 of the first arm 81 downward, so that the first arm 81 pivots downward on the first pivot shaft S1. Thus, the inner end 821 of the second arm 82 coupled to the outer end 812 of the first arm 81 moves downward. Thus, the second arm 82 pivots on the second pivot shaft S2, so that the outer end 822 of the second arm 82 moves upward and additionally the sorting chute 7 to which the outer end 822 of the second arm 82 is fixed moves upward. Therefore, the sorting chute 7 pivots on the second pivot shaft S2. The drive unit 8 pivots the sorting chute 7 on the second pivot shaft S2 to raise the sorting chute 7. Therefore, the drive unit 8 moves the sorting chute 7 upward. In this manner, the drive unit 8 switches the position of the sorting chute 7 from the first position to the second position. After the position of the sorting chute 7 is switched to the second position, the control unit 30 (CPU 31) performs control such that the gate 5a of the weighing hopper 5 opens. Thus, the articles slide down on the second slide face 712 of the sorting chute 7 and then are discharged outside the sorting chute 7.

After the articles are discharged outside the sorting chute 7, the drive unit 8 switches the position of the sorting chute 7 from the second position to the first position. The drive unit 8 performs a reverse operation to the operation described above. In the present embodiment, as illustrated in Figs. 4 and 5, the drive unit 8 moves the outer end 812 of the first arm 81 upward, so that the first arm 81 pivots upward on the first pivot shaft S1. Thus, the inner end 821 of the second arm 82 coupled to the outer end 812 of the first arm 81 moves upward. Thus, the second arm 82 pivots on the second pivot shaft S2, so that the outer end 822 of the second arm 82 moves downward and additionally the sorting chute 7 to which the outer end 822 of the second arm 82 is fixed moves downward. Therefore, the sorting chute 7 pivots on the second pivot shaft S2. The drive unit 8 pivots the sorting chute 7 on the second pivot shaft S2 to lower the sorting chute 7. In this manner, the drive unit 8 switches the position of the sorting chute 7 from the second position to the first position.

That is, the sorting chute 7 is connected to the second pivot shaft S2 (pivot) disposed at the booster hopper 6, and the sorting chute 7 pivots on the second pivot shaft S2 in a case where the drive unit 8 switches the position of the sorting chute 7 between the first position and the second position.

As illustrated in the present embodiment, the drive unit 8 moves the sorting chute 7 upward to selectively switch the position of the sorting chute 7 between the first position and the second position. Thus, in comparison to a case where the drive unit 8 moves the sorting chute 7 along the width direction W, a reduction can be made in space for installation of the weighing apparatus 1.

The drive unit 8 is disposed closer to the center of the weighing apparatus 1 than the booster hopper 6 is. The drive unit 8 performs opening and shutting of the gate 6a of the booster hopper 6. Thus, no drive unit requires separately providing for the booster hopper 6. Therefore, no space for arrangement of the drive unit 8 is required outside the discharge chute 9 in the width direction W, so that a further reduction can be made in space for installation of the weighing apparatus 1.

As illustrated in Figs. 4 and 5, in side view of the weighing apparatus 1, the second distance D2 is longer than the first distance D1. At the first position, the outlet 72 is located in the discharge chute 9. Thus, in comparison to a case where the outlet 72 is located outside the discharge chute 9, a reduction can be made in space for installation of the weighing apparatus 1. Because the second distance D2 is longer than the first distance D1, at the second position, the inner end 722 of the outlet 72 can be disposed far as the lower end of the second slide face 712 on which articles slide down. Thus, at the second position, when the articles discharged in the second direction SD are discharged outside the discharge chute 9, the discharged articles can be inhibited from accidentally coming into the discharge chute 9.

In side view of the weighing apparatus 1, the first distance D1 and the second distance D2 are shorter than the shortest distance between the second pivot shaft S2 and the inner-wall face of the discharge chute 9. Even in a case where the outlet 72 is located in the discharge chute 9, the sorting chute 7 is out of touch with the discharge chute 9. Thus, the drive unit 8 can switch the position of the sorting chute 7, smoothly.

### (Second Embodiment)

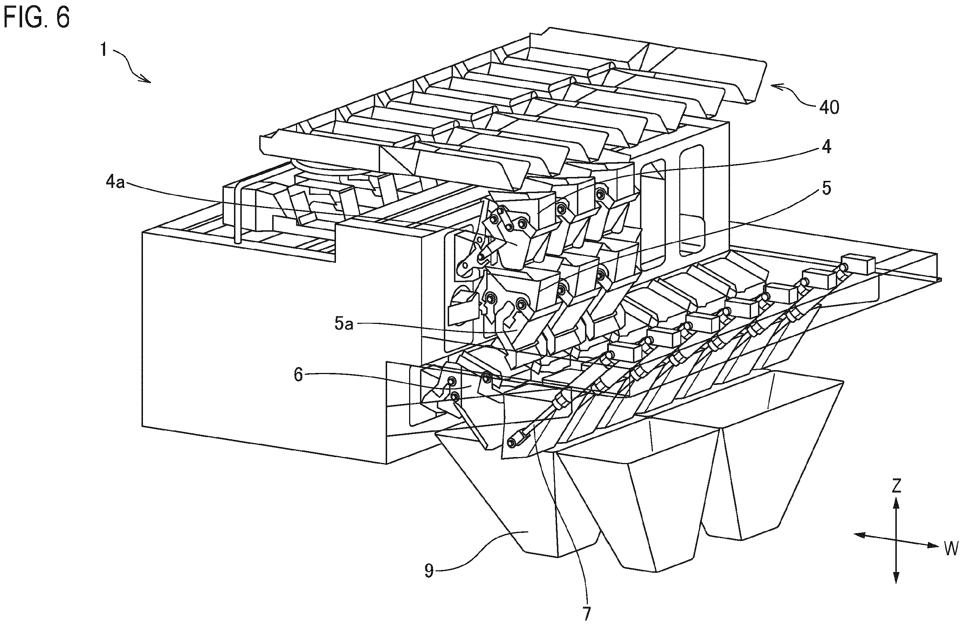

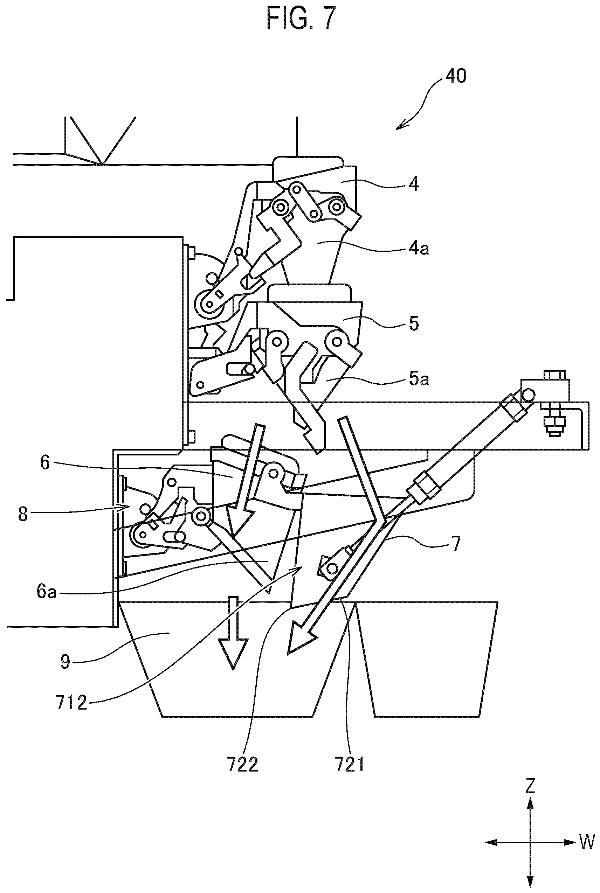

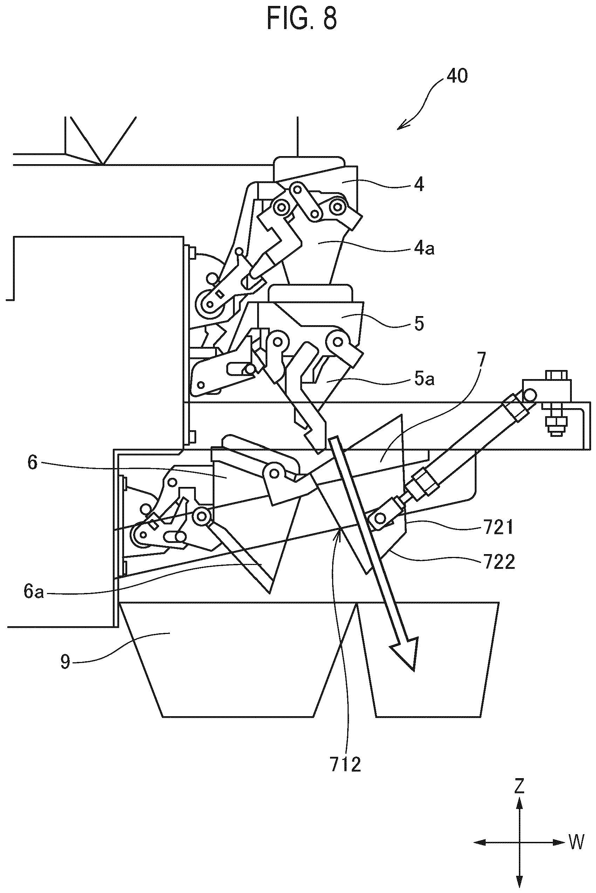

With reference to Figs. 6 to 8, a weighing apparatus 1 according to a second embodiment will be described below with a focus on the difference from the weighing apparatus 1 according to the first embodiment described above. Here, Fig. 6 illustrates the entire configuration of the weighing apparatus according to the second embodiment. Fig. 7 is a side view illustrating a first position of a sorting chute according to the second embodiment. Fig. 8 is a side view illustrating a second position of the sorting chute according to the second embodiment.

Specifically, in the first embodiment described above, the example in which the plurality of heads 40 is disposed annularly, has been given.

In contrast to this, the weighing apparatus 1 according to the present embodiment includes a plurality of heads 40 disposed in series, as illustrated in Fig. 6. That is the weighing apparatus 1 according to the present embodiment includes the plurality of heads 40 disposed side by side in the width direction W, as illustrated in Fig. 6. Therefore, the weighing apparatus 1 according to the present embodiment may serve as a linear combination weighing apparatus including weighing hoppers 5 disposed in series and booster hoppers 6 disposed in series.

As illustrated in Figs. 7 and 8, in the weighing apparatus 1 according to the present embodiment, a drive unit 8 may be disposed closer to the body of the weighing apparatus 1 than a booster hopper 6 (head 40) is. Therefore, no space for arrangement of the drive unit 8 away from the body of the weighing apparatus 1 requires providing, resulting in a further reduction in space for installation of the weighing apparatus 1.

Note that the body of the weighing apparatus 1 is a main part of the weighing apparatus 1. For example, the body of the weighing apparatus 1 may be provided with conveyers (radial feeders 3). The body of the weighing apparatus 1 may be provided with drive units that drive, respectively, pool hoppers 4, drive units that drive, respectively, the weighing hoppers 5, and drive units that drive, respectively, the booster hoppers 6.

In the weighing apparatus 1 according to the present embodiment, the drive unit 8 may be disposed further away from the body of the weighing apparatus 1 than the booster hopper 6 (head 40) is.

### <Other Embodiments>

The embodiments have been described above, but it should be understood that the invention is not limited to the descriptions and the drawings included in part of the disclosure. Persons skilled in the art can conceive, from the disclosure, various alternative embodiments, examples, and investment techniques.

In each embodiment described above, the weighing apparatus 1 has been exemplarily given as a combination weighing apparatus. However, the weighing apparatus 1 is not limited to this and thus may be a different type of weighing apparatus.

In the embodiments described above, each drive unit 8 may be disposed further away from the center of the weighing apparatus 1 than the booster hopper 6 is. Each drive unit 8 may lower the sorting chute 7 to switch the position of the sorting chute 7 from the first position to the second position. The method of moving, by each drive unit 8, the sorting chute 7 is not limited to the method described above. For example, each drive unit 8 may move a hook hooking the sorting chute 7 in the vertical direction Z, to selectively switch the position of the sorting chute 7 between the first position and the second position.

Note that provided may be a program that causes a terminal device to perform each piece of processing in the control unit 30 described above. The program may be stored in a computer-readable medium. Use of the computer-readable medium enables installation of the program on a computer. The computer-readable medium storing the program herein may be a non-transitory recording medium. The non-transitory recording medium may be, but is not particularly limited to, a recording medium, such as a CD-ROM or a DVD-ROM.

### Reference Signs List

- 1: weighing apparatus
- 5: weighing hopper
- 6: booster hopper
- 7: sorting chute
- 8: drive unit
- 9: discharge chute
- FD: first direction
- SD: second direction

## Claims

1. A weighing apparatus (1) comprising:
a weighing hopper (5) that temporarily receives an article in order to weigh the article and sorts and discharges the article weighed in either a first direction (FD) or a second direction (SD);
a booster hopper (6) that temporarily receives the article discharged in the first direction (FD) and discharges the article received, downstream;
a sorting chute (7) that discharges the article discharged in the second direction (SD), downstream;
a discharge chute (9) in which the article discharged from the booster hopper (6) or the sorting chute (7) slides down; and
a drive unit (8) that switches a position of the sorting chute (7), wherein
the sorting chute (7):
discharges, at a first position, the article discharged in the second direction (SD) to the discharge chute (9), and
discharges, at a second position, the article discharged in the second direction (SD), outside the discharge chute (9), and
the drive unit (8) moves the sorting chute (7) upward to selectively switch the position of the sorting chute (7) between the first position and the second position.

2. The weighing apparatus according to claim 1, wherein
the booster hopper (6) includes a gate (6a) openable and shuttable, and
the drive unit (8) is disposed closer to a center of the weighing apparatus than the booster hopper (6) is, and performs opening and shutting of the gate (6a).

3. The weighing apparatus according to claim 1, wherein
the weighing apparatus serves as a linear combination weighing apparatus including a plurality of the weighing hoppers (5) disposed in series and a plurality of the booster hoppers (6) disposed in series,
the plurality of the booster hoppers (6) each has a gate (6a) openable and shuttable, and
the drive units (8) is disposed closer to a body of the weighing apparatus than the plurality of the booster hoppers (6) is.

4. The weighing apparatus according to claim 1, wherein
the drive unit (8) pivots the sorting chute (7) while moving the sorting chute (7) in a vertical direction (Z), to switch the position of the sorting chute (7) between the first position and the second position.

5. The weighing apparatus according to claim 1, wherein
the weighing apparatus serves as a linear combination weighing apparatus including a plurality of the weighing hoppers (5) disposed in series and a plurality of the booster hoppers (6) disposed in series, and
the drive units (8) is disposed further away from a body of the weighing apparatus than the plurality of the booster hoppers (6) is.

6. The weighing apparatus according to claim 2, wherein
the sorting chute (7) is connected to a pivot (S2) disposed at the booster hopper (6), and
when the drive unit (8) switches the position of the sorting chute (7) between the first position and the second position, the sorting chute (7) pivots on the pivot (S2).

7. The weighing apparatus according to any one of claims 1 to 6, wherein
the drive unit (8) raises the sorting chute (7) to switch the position of the sorting chute (7) from the first position to the second position,
at the first position, an outlet (72) of the sorting chute (7) is located in the discharge chute (9),
the drive unit (8) pivots the sorting chute (7) on a predetermined pivot shaft (S2) in a case where the drive unit (8) switches the position of the sorting chute (7) from the first position to the second position,
the outlet (72) of the sorting chute (7) has:
an inner end (722) that serves, at the second position, as a lower end of a slide face (71) on which the article slides down; and
an outer end (721) that serves, at the first position, as a lower end of a slide face (71) on which the article slides down, and is further away from a center of the discharge chute (9) than the inner end (722) is, and
in side view of the weighing apparatus, a distance (D2) between the inner end (722) of the outlet (72) and the predetermined pivot shaft (S2) is longer than a distance (D1) between the outer end (721) of the outlet (72) and the predetermined pivot shaft (S2).

## Patentansprüche

1. Wiegevorrichtung (1) die aufweist:
einen Wiegetrichter (5), der einen Artikel vorübergehend aufnimmt, um den Artikel zu wiegen, und den gewogenen Artikel sortiert und entweder in einer ersten Richtung (FD) oder einer zweiten Richtung (SD) abgibt;
einen Zusatztrichter (6), der den in der ersten Richtung (FD) abgegebenen Artikel vorübergehend aufnimmt und den aufgenommenen Artikel stromabwärts abgibt;
eine Sortierrutsche (7), die den in der zweiten Richtung (SD) abgegebenen Artikel stromabwärts abgibt;
eine Abgaberutsche (9), in der der aus dem Zusatztrichter (6) oder der Sortierrutsche (7) abgegebene Artikel nach unten gleitet; und
eine Antriebseinheit (8), die eine Position der Sortierrutsche (7) umschaltet, wobei
die Sortierrutsche (7):
in einer ersten Position den in der zweiten Richtung (SD) abgegebenen Artikel an die Abgaberutsche (9) abgibt, und
in einer zweiten Position den in der zweiten Richtung (SD) abgegebenen Artikel außerhalb der Abgaberutsche (9) abgibt, und
die Antriebseinheit (8) die Sortierrutsche (7) nach oben bewegt, um selektiv die Position der Sortierrutsche (7) zwischen der ersten Position und der zweiten Position umzuschalten.

2. Wiegevorrichtung nach Anspruch 1, wobei der Zusatztrichter (6) ein öffenbares und schließbares Tor (6a) aufweist, und
die Antriebseinheit (8) näher an der Mitte der Wiegevorrichtung angeordnet ist als der Zusatztrichter (6) und das Öffnen und Schließen des Tors (6a) durchführt.

3. Wiegevorrichtung nach Anspruch 1, wobei die Wiegevorrichtung als eine lineare Kombinations-Wiegevorrichtung dient, die mehrere in Reihe angeordnete Wiegetrichter (5) und mehrere in Reihe angeordnete Zusatztrichter (6) aufweist,
die mehreren Zusatztrichter (6) jeweils ein öffenbares und schließbares Tor (6a) aufweisen, und
die Antriebseinheit (8) näher an einem Körper der Wiegevorrichtung angeordnet ist als die mehreren Zusatztrichter (6).

4. Wiegevorrichtung nach Anspruch 1, wobei die Antriebseinheit (8) die Sortierrutsche (7) dreht, während sie die Sortierrutsche (7) in einer vertikalen Richtung (Z) bewegt, um die Position der Sortierrutsche (7) zwischen der ersten Position und der zweiten Position umzuschalten.

5. Wiegevorrichtung nach Anspruch 1, wobei die Wiegevorrichtung als eine lineare Kombinations-Wiegevorrichtung dient, die mehrere in Reihe angeordnete Wiegetrichter (5) und mehrere in Reihe angeordnete Zusatztrichter (6) aufweist, und
die Antriebseinheit (8) weiter weg von einem Körper der Wiegevorrichtung angeordnet ist als die mehreren Zusatztrichter (6).

6. Wiegevorrichtung nach Anspruch 2, wobei die Sortierrutsche (7) mit einem Drehzapfen (S2) verbunden ist, der am Zusatztrichter (6) angeordnet ist, und
wenn die Antriebseinheit (8) die Position der Sortierrutsche (7) zwischen der ersten Position und der zweiten Position umschaltet, sich die Sortierrutsche (7) um den Drehzapfen (S2) dreht.

7. Wiegevorrichtung nach einem der Ansprüche 1 bis 6, wobei die Antriebseinheit (8) die Sortierrutsche (7) anhebt, um die Position der Sortierrutsche (7) von der ersten Position in die zweite Position umzuschalten,
in der ersten Position ein Auslass (72) der Sortierrutsche (7) in der Abgaberutsche (9) angeordnet ist,
die Antriebseinheit (8) in einem Fall, in dem die Antriebseinheit (8) die Position der Sortierrutsche (7) von der ersten Position in die zweite Position umschaltet, die Sortierrutsche (7) um eine vorbestimmte Drehachse (S2) dreht,
der Auslass (72) der Sortierrutsche (7) aufweist:
ein inneres Ende (722), das in der zweiten Position als ein unteres Ende einer Gleitfläche (71) dient, auf der der Artikel nach unten gleitet; und
ein äußeres Ende (721), das in der ersten Position als ein unteres Ende einer Gleitfläche (71) dient, auf der der Artikel nach unten gleitet, und von einer Mitte der Abgaberutsche (9) weiter entfernt ist als das innere Ende (722), und
in einer Seitenansicht der Wiegevorrichtung ein Abstand (D2) zwischen dem inneren Ende (722) des Auslasses (72) und der vorbestimmten Drehachse (S2) länger ist als ein Abstand (D1) zwischen dem äußeren Ende (721) des Auslasses (72) und der vorbestimmten Drehachse (S2).

## Revendications

1. Un appareil de pesage (1) composé des éléments suivants :
une trémie de pesage (5) qui reçoit, temporairement, un article afin de peser cet article avant de trier cet article ainsi pesé et de le décharger dans une première direction (FD) ou une deuxième direction (SD)
une trémie d'appoint (6) qui reçoit, temporairement, l'article déchargé dans la première direction (FD) puis décharge, en aval, l'article ainsi reçu
une goulotte de tri (7) qui décharge, en aval, l'article déchargé dans la deuxième direction (SD)
une goulotte de décharge (9) dans laquelle vient se déverser l'article déchargé par la trémie d'appoint (6) ou par la goulotte de tri (7) et
un groupe de transmission (8) qui active une position de la goulotte de tri (7), et
cette goulotte de tri (7) :
décharge, à une première position, l'article déchargé, dans la deuxième direction (SD), dans la goulotte de décharge (9) et
décharge, à une deuxième position, l'article déchargé, dans la deuxième direction (SD), à l'extérieur de la goulotte de décharge (9) et
le groupe de transmission (8) fait monter la goulotte de tri (7) afin de faire alterner, de manière sélective, la position de la goulotte de tri (7) entre la première position et la deuxième position.

2. L'appareil de pesage que décrit la revendication 1, si ce n'est que :
la trémie d'appoint (6) comporte une grille (6a) qui peut s'ouvrir et se fermer, et que
le groupe de transmission (8) est positionné plus près du centre de l'appareil de pesage que la trémie d'appoint (6) et assure l'ouverture et la fermeture de la grille (6a).

3. L'appareil de pesage que décrit la revendication 1, si ce n'est que :
cet appareil de pesage sert d'appareil de pesage combiné et linéaire, avec une pluralité de trémies de pesage (5) disposées en série et une pluralité de trémies d'appoint (6) disposées en série, et
chaque élément de cette pluralité de trémies d'appoint (6) a une grille (6a) qui peut s'ouvrir et se fermer, et
le groupe de transmission (8) est positionné plus près du corps de l'appareil de mesure que la pluralité des trémies d'appoint (6).

4. L'appareil de pesage que décrit la revendication 1, si ce n'est que :
le groupe de transmission (8) fait pivoter la goulotte de tri (7) tout en déplaçant cette goulotte de tri (7) dans un sens vertical (Z) pour alterner,la position de la goulotte de tri (7) entre la première position et la deuxième position.

5. L'appareil de pesage que décrit la revendication 1, si ce n'est que :
cet appareil de pesage est un appareil de pesage combiné et linéaire qui comporte une pluralité de trémies de pesage (5) disposées en série et une pluralité de trémies d'appoint (6) disposées en série et
les groupes de transmission (8) sont implantés plus loin du corps de l'appareil de pesage que la pluralité des trémies d'appoint (6).

6. L'appareil de pesage que décrit la revendication 2, si ce n'est que :
la goulotte de tri (7) est raccordée à un pivot (S2) implanté au niveau de la trémie d'appoint (6) et
lorsque le groupe de transmission (8) alterne la position de la goulotte de tri (7) entre la première position et la deuxième position, la goulotte de tri (7) pivote sur le pivot (S2).

7. L'appareil de pesage que décrit l'une ou l'autre des revendications 1 à 6, si ce n'est que :
le groupe de transmission (8) fait monter la goulotte de tri (7) pour changer la position de cette goulotte de tri (7) et la faire passer de la première position à la deuxième position,
au niveau de la première position, une sortie (72) de la goulotte de tri (7) est implantée dans la goulotte de décharge (9),
le groupe de transmission (8) fait pivoter la goulotte de tri (7) sur un arbre de pivotement prédéterminé (S2) lorsque ce groupe de transmission (8) change la position de la goulotte de tri (7) et la fait passer de la première position à la deuxième position,
la sortie (72) de la goulotte de tri (7) a :
une extrémité interne (722) qui sert, au niveau de la deuxième position, d'extrémité inférieure d'une surface de glissement (71) sur laquelle descend l'article en glissant et
une extrémité externe (721) qui sert, au niveau de la première position, d'extrémité inférieure d'une surface de glissement (71) sur laquelle descend l'article en glissant, et est plus loin du centre de la goulotte de décharge (9) que ne l'est l'extrémité interne (722), et
dans la vue latérale de l'appareil de pesage, la distance (D2) entre l'extrémité interne (722) de la sortie (72) et l'arbre de pivotement prédéterminé (S2) est plus longue que la distance (D1) entre l'extrémité externe (721) de la sortie (72) et l'arbre de pivotement prédéterminé (S2).
